# EUROPEAN PATENT SPECIFICATION

(11) **EP 2 646 246 B1**
(45) Date of publication and mention of the grant of the patent: **18.03.2015**
(21) Application number: 11787668.0
(22) Date of filing: 18.11.2011
(51) Int. Cl.: B32B 27/32, E02D 31/00, E04D 5/10

(54) **MEMBRANES**
MEMBRANE
MEMBRANES

(30) Priority: 29.11.2010 EP 10192958; 30.11.2010 US 417979 P
(43) Date of publication of application: 09.10.2013
(73) Proprietor: Basell Poliolefine Italia S.r.l., 20127 Milano (IT)
(72) Inventor: LUNGHI, Luca, I-44123 Ferrara (IT); FELISATI, Andrea, I-44122 Ferrara (IT)
(74) Representative: Colucci, Giuseppe
(86) International application number: PCT/EP2011/070412
(87) International publication number: WO 2012/072426

(56) References cited:
- EP-A1- 1 541 337
- WO-A1-2009/077481
- WO-A2-2006/023117
- US-A1- 2006 046 084
- US-A1- 2007 194 482

## Description

The present invention relates to a polyolefin membrane suited for use in waterproofing applications. In particular, the present invention relates to a membrane for use in roofing or geomembrane applications. Such membrane comprises at least two layers.

Multilayer membranes made of or comprising polyolefin materials are known in the art.

It is also known that the multilayer structure makes it possible to achieve advantageous effects, as disclosed in particular in the published US application No. 2007/0194482. In fact, as explained in the said document, it is known that special properties such as fire retardancy, UV resistance, enhanced strength, can be achieved by coupling a thin layer of material with special properties on top of a layer of standard base material.

Examples of multilayer membranes with a top layer comprising propylene (co)polymers are provided in WO2009077481.

The present applicant has now found that by using selected ethylene polymers in one layer, typically the top layer, a particularly advantageous and unusual set of properties is achieved. In fact the membrane of the invention is highly inert to aggressive chemical substances, has high tensile properties, improved tear and puncture resistance, reduced surface stickiness and good thermal weldability.

Thus the present invention provides a membrane comprising a layer (A) and a layer (B), where the layer (A) comprises a composition (i) comprising the following polymer components, all percent amounts being by weight:
a) 10-40%, preferably 20-40%, more preferably 25-38%, of one or more propylene polymers selected from propylene homopolymers, copolymers of propylene with ethylene or a CH₂=CHR α-olefin, where R is a C₂-C₈ alkyl radical, and copolymers of propylene with ethylene and said CH₂=CHR α-olefin, said copolymers containing over 85% of propylene and having a fraction insoluble in xylene at room temperature greater than 80%; and
b) 60-90%, preferably 60-80%, more preferably 62-75%, of one or more copolymers selected from (b1) copolymers of ethylene with propylene or a CH₂=CHR α-olefin, where R is a C₂-C₈ alkyl radical, and optionally minor quantities of a diene, and (b2) copolymers of ethylene with propylene and said α-olefin, and optionally minor quantities of a diene, said copolymers containing ethylene in a quantity lower than 40%, preferably from 20 to 38%, and having solubility in xylene at room temperature greater than 70%, preferably greater than 80%;
the amounts of (a) and (b) being referred to the total weight of (a) and (b); and the layer (B) comprises an ethylene homopolymer or copolymer having density from 0.915 to 0.980 cm³/g, preferably from 0.920 to 0.970 cm³/g, measured according to ISO 1183, or a mixture of two or more ethylene homopolymers or copolymers as defined above; said layer (B) being at least partially bonded to the layer (A).

Typically the layer (A) is the base layer, while the layer (B) is the top layer.

The composition (i) is generally a heterophasic composition.

In addition to the previously said advantageous properties, the membrane of the invention allows an optimal adhesion of metal layers, inks and colorants in general to the outside surface of the layer (B). Consequently excellent scratch resistance and UV resistance are achieved as well. It is also possible to add coloring and architectural effects.

Preferably the layer (B) is at least partially bonded to the layer (A) in the absence of a bonding agent (like a hot melt adhesive) between the two layers.

In the present description room temperature refers to a temperature around 25°C.

In the heterophasic composition (i) it is preferable that component (a) be a copolymer instead of a homopolymer. Preferably the propylene content in the copolymers of component (a) is from 90 to 99% by weight.

The fraction insoluble in xylene at room temperature of the polymers of component (a) preferably ranges from 85 to 99% in the case of homopolymers, and from 85 to 95% in the case of copolymers.

Preferably the composition (i) has flexural modulus of 50 MPa or higher.

A membrane wherein the composition (i) contains at least 20% by weight of component (a) is particularly preferred, because of its superior mechanical properties.

Examples of the above mentioned CH₂=CHR α-olefins where R is a C₂-C₈ alkyl radical, present in the composition (i), are butene-1, pentene-1, 4-methyl-pentene-1, hexene-1, and octene-1. Butene-1 is preferred.

Whenever present, the amount of diene in component (b) of the composition (i) is preferably from 1 to 10% by weight with respect to the total weight of component (b). Examples of dienes are butadiene, 1,4-hexadiene, 1,5-hexadiene, and ethylidene-1-norbornene.

Examples of composition (i) are described in published European patent application EP-A-0472946 and in WO03/011962.

The composition (i) can be prepared by mixing the previously prepared components (a) and (b) in the fluid state, i.e., at temperatures greater than their softening or melting point, or, more preferably, by sequential polymerization in two or more stages. It is preferred to carry out the polymerization processes for the preparation of the single components or of the heterophasic composition (sequential polymerization) in the presence of a highly stereospecific Ziegler-Natta catalyst. In particular the catalyst system used comprises (1) a solid catalyst component containing a titanium compound and an electron-donor compound supported on magnesium chloride, and (2) an Al-containing cocatalyst and optionally (3) an electron-donor compound (external donor).

The solid catalyst component (1) contains as electron-donor a compound generally selected among the ethers, ketones, lactones, compounds containing N, P and/or S atoms, and mono-and dicarboxylic acid esters.

Particularly suited among the said electron-donor compounds are phthalic acid esters and succinic acid esters.

Suitable succinic acid esters are represented by the formula (I): 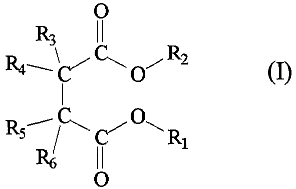 wherein the radicals R₁ and R₂, equal to or different from each other, are a C1-C20 linear or branched alkyl, alkenyl, cycloalkyl, aryl, arylalkyl or alkylaryl group, optionally containing heteroatoms; the radicals R₃ to R₆ equal to or different from each other, are hydrogen or a C1-C20 linear or branched alkyl, alkenyl, cycloalkyl, aryl, arylalkyl or alkylaryl group, optionally containing heteroatoms, and the radicals R₃ to R₆ which are joined to the same carbon atom can be linked together to form a cycle.
R₁ and R₂ are preferably C1-C8 alkyl, cycloalkyl, aryl, arylalkyl and alkylaryl groups. Particularly preferred are the compounds in which R₁ and R₂ are selected from primary alkyls and in particular branched primary alkyls. Examples of suitable R₁ and R₂ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which R₃ to R₅ are hydrogen and R₆ is a branched alkyl, cycloalkyl, aryl, arylalkyl and alkylaryl radical having from 3 to 10 carbon atoms. Another preferred group of compounds within those of formula (I) is that in which at least two radicals from R₃ to R₆ are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is R₃ and R₅ or R₄ and R₆, are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-containing compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical). The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in suspension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The above mentioned sequential polymerization process for the production of the composition (i) comprises at least two stages, where in the first stage propylene is polymerized, optionally in the presence of ethylene and/or said α-olefin as comonomer(s), to form component (a), and in the subsequent stage(s) mixtures of ethylene/propylene and/or an other α-olefin and optionally a diene are polymerized to form component (b). The polymerization processes are carried out in either liquid, gas, or liquid/gas phase. The reaction temperature in the various stages of polymerization can be equal or different, and generally ranges from 40 to 90°C, preferably from 50 to 80°C for component (a), and from 40 to 60°C for component (b).

The pressure of a single stage, if carried out in liquid monomer, is the one which competes with the vapor pressure of the liquid propylene at the operating temperature used, and is modified by the overpressure of the monomer(s) and the hydrogen used as molecular weight regulator, and possibly by the vapor pressure of the small quantity of inert diluent used to feed the catalyst mixture.

The polymerization pressure, if done in liquid phase, indicatively can be from 5 to 30 atm. Examples of sequential polymerization processes are described in the said published European patent application EP-A-0472946 and WO03/011962.

The MFR values, measured according to ISO 1183, at 230°C with a load of 2.16 kg of the composition (i) is generally from 0.1 to 100 g/10 min, preferably from 0.2 to 50 g/10 min.

The desired MFR values for the composition (i) to be used in the membrane of the invention, can be obtained directly in polymerization, by adequately regulating the molecular weight regulator (hydrogen, for example), or can be obtained by subjecting said polymer components or compositions to visbreaking. Said polymer chain scissioning or visbreaking is carried out by using well known techniques. One of them consists of using peroxides which are added in sufficient quantities to the polymer composition to provide the desired degree of visbreaking, upon heating, generally in an extruder.

The peroxides which are most conveniently used in the polymer visbreaking process have a decomposition temperature preferably ranging from 150°C to 250°C. Examples of said peroxides are di-tert-butyl peroxide, dicumyl peroxide, 2,5-dimethyl-2,5-di(tert-butylperoxy)hexyne and Luperox 101 2,5-dimethyl-2,5-di(tert-butylperoxy)hexane, all of which are commercially available.

The quantity of peroxide necessary for the visbreaking process preferably ranges from 0.001 to 1.5% by weight of the polymer, more preferably from 0.002 to 0.6%.

The ethylene (co)polymers to be used for the layer (B) are well known in the art and available on the market. In particular they are selected from LDPE and HDPE.

Preferred examples are hereinafter provided.

### LDPE

The LDPE (Low Density Polyethylene) preferably used for the layer (B) is an ethylene homopolymer or an ethylene copolymer containing minor amounts of other comonomers, like butyl acrylate, prepared by high pressure polymerization using free radical initiators. The density of said LDPE typically ranges from 0.915 to 0.935 g/cm³, preferably from 0.920 to 0.935 g/cm³, measured according to the standard ISO 1183. The MFR of said LDPE is preferably from 0.1 to 15 g/10 min., more preferably from 0.1 to 10 g/10 min., measured according to ISO 1133, at 190°C with a load of 2.16 kg. Such kinds of LDPE are well known in the art and available on the market. Specific examples are the polymers available under the tradename Lupolen.

### HDPE

The HDPE (High Density Polyethylene) preferably used for the layer (B) is an ethylene polymer, typically a homopolymer, having a density of higher than 0.935 g/cm³, preferably higher than 0.940 g/cm³, in particular from 0.940 to 0.980 g/cm³ or from 0.940 to 0.970 g/cm³, measured according to the standard ISO 1183. The MFR of said HDPE is preferably from 0.5 to 15 g/10 min., more preferably from 1 to 15 g/10 min, measured according to ISO 1133, at 190°C with a load of 21.6 kg. Such kinds of HDPE are well known in the art and available on the market. Specific examples are the polymers available under the tradenames Hostalen and Finathene.

All the polymer components and compositions used for the membrane of the present invention can also contain additives commonly employed in the art, such as antioxidants, light stabilizers, heat stabilizers, nucleating agents, colorants and fillers.

As previously explained, the membrane of the present invention comprises a layer (A) and a layer (B).

Other layers, like in particular reinforcing layers, may be present.

Such reinforcing layers can be made of polyolefin materials, like propylene homopolymers and copolymers, or polyethylene terephthalate (PET). In particular they can be woven or nonwoven fabrics made of fibers comprising the said polyolefin materials.

Preferred thickness values for the layer (A) are of 500 µm or more.

Preferred thickness values for the layer (B) are from 10 to 200 µm.

Preferably the ratio of the thickness of the layer (A) to the thickness of the layer (B) is from 5 to 100.

Preferred overall thickness for the membrane of the present invention is from 510 to 1500 µm, in particular from 600 to 1500 µm.

The membrane of the present invention can be prepared with the apparatuses and processes well known in the relevant art, in particular by extrusion, coextrusion and lamination.

In the coextrusion process, the polymer materials are fed to different extruders and coextruded one on top of the other via a slit die.

As the layers are in the molten state when they come in contact, they adhere each other without requiring any further treatment.

In the lamination process, the layer (A) and the layer (B), which are previously prepared by separate extrusion, are laminated together by means of heat. Additional layers can be easily introduced by way of the said lamination process.

Extrusion and coextrusion are carried out preferably with a melt temperature profile from 185 to 210 °C, and a head temperature from 200 to 220 °C.

It is preferred to carry out the lamination consecutively to the extrusion of the layer (A), so that said layer (A) is still hot when contacted with the layer (B). In such a case the temperature of the first calander stack is from 40 to 60 °C.

The layer (B) can be in form of a film, produced according to techniques well known in the art, like in particular the cast film process. However, also blown films and bioriented films (BOPP) can be used.

In the cast film process, the molten polymer materials are forced through a long, thin, rectangular shaped slit. The extrudate has the shape of a thin film. The film is cooled before winding-up.

As previously said, the membrane of the present invention can be in particular a membrane for use in roofing, namely a roofing membrane, or in geomembrane applications, namely a geomembrane.

The following examples are given to illustrate, not to limit, the present invention.

### MATERIALS USED IN THE EXMPLES

### Base layer (A)

Heco: heterophasic composition (i) used to prepare the base layer (A).

It is a heterophasic polyolefin composition having a MFR of 0.6 g/10 min. and flexural modulus of 80 MPa, comprising (weight percentages):
a) 32% of a crystalline propylene random copolymer containing 3.5% of ethylene and about 6% of a fraction soluble in xylene at room temperature, and having an intrinsic viscosity [η] of 1.5 dl/g;
b) 68% of an ethylene/propylene copolymer containing 27% of ethylene, having solubility in xylene at room temperature of 89% by weight.

The intrinsic viscosity of the fraction soluble in xylene at room temperature of the total composition is of 3.2 dl/g.

Such intrinsic viscosity values are determined in tetrahydronaphthalene at 135°C.

Such composition has been prepared by a sequential polymerization process in the presence of a stereospecific Ziegler-Natta catalyst supported on magnesium dichloride.

### Top layer (B)

The following ethylene polymers are used to prepare the top layer (B)
LDPE: low density polyethylene having density of 0.927 g/cm³ and MFR of 0.3 g/10 min., sold by Lyondellbasell with trademark Lupolen 3010 D;
HDPE: high density polyethylene having density of 0.956 g/cm³ and MFR of 9 g/10 min., sold by Borealis with trademark FS1560.

All the said polymer materials contain a standard stabilizing formulation to prevent heat degradation.

### Examples 1 and 2 and Comparison Example 1

Two layer membranes are prepared by extruding the above described Heco composition, to form the base layer (A), and laminating the said base layer with the previously prepared top layer (B).

Said top layer (B) is prepared in form of cast film with a conventional film production process.

In the so obtained membranes, the thickness of the base layer (A) is of 1 mm, while the thickness of the top layer (B) is of 50 µm, except that in Comparison Example 1 the top layer (B) is not produced.

In the membrane of Example 1 the top layer (B) is made of the previously described LDPE.

In the membrane of Example 2 the top layer (B) is made of the previously described HDPE.

The extrusion and lamination steps are carried out under the previously described conditions.

The mechanical properties of the so obtained membranes are reported in Table 1.

The following test methods are used to measure the specified properties.

### Density

Measured according to ISO 1183.

### Melt Flow Rate (MFR)

Measured according to ISO 1183, at 230°C with a load of 2.16 kg for the heterophasic composition (i), according to ISO 1133, at 190°C with a load of 2.16 kg for LDPE, according to ISO 1133, at 190°C with a load of 21.6 kg for HDPE .

### Tensile stress and strain at yield and at break

Determined according to ASTM D 6693.

### Tear resistance

Determined according to ASTM D 1004.

### Puncture resistance

Determined according to ASTM D 4833.

The stress/strain curves recorded for the measurement of the said tensile properties show that no delamination of the two layers occurs up to break.

**Table 1**

| Example No. | | 1 | 2 | Comp. 1 |
|---|---|---|---|---|
| Variable Name | Units | | | |
| Tensile stress at yield (50mm/min) MD | N/mm² | 6 | 6.1 | 5.7 |
| Tensile strain at yield (50mm/min) MD | % | 54 | 48 | 31.6 |
| Tensile stress at break (50mm/min) MD | N/mm² | 20.5 | 21 | 21.4 |
| Tensile strain at break (50mm/min) MD | % | 810 | 800 | 820 |
| Tear resistance (50mm/min) Maximum Load MD | N | 71 | 77 | 71 |
| Puncture resistance (300mm/min) Maximum Load | N | 81 | 87 | 72 |
| Puncture resistance (300mm/min) deformation at break | mm | 11.7 | 12.7 | 11.1 |

| | | | | |
|---|---|---|---|---|
| Note: Comp. = Comparison; MD = Machine Direction | | | | |

Finally, on the produced membranes an assessment of thermal weldability is made.

The weldability test shows that the said membranes of Examples 1 and 2 can be welded at lower temperature than the corresponding membrane of Comparison Example 1.

## Claims

1. A membrane comprising a layer (A) and a layer (B), where the layer (A) comprises a composition (i) comprising the following polymer components, all percent amounts being by weight:
a) 10-40% of one or more propylene polymers selected from propylene homopolymers, copolymers of propylene with ethylene or a CH₂=CHR α-olefin, where R is a C₂-C₈ alkyl radical, and copolymers of propylene with ethylene and said CH₂=CHR α-olefin, said copolymers containing over 85% of propylene and having a fraction insoluble in xylene at room temperature greater than 80%; and
b) 60-90% of one or more copolymers selected from (b1) copolymers of ethylene with propylene or a CH₂=CHR α-olefin, where R is a C₂-C₈ alkyl radical, and optionally minor quantities of a diene, and (b2) copolymers of ethylene with propylene and said α-olefin, and optionally minor quantities of a diene, said copolymers containing ethylene in a quantity lower than 40%, and having solubility in xylene at room temperature greater than 70%;
the amounts of (a) and (b) being referred to the total weight of (a) and (b); and the layer (B) comprises an ethylene homopolymer or copolymer having density from 0.915 to 0.980 g/cm³, measured according to ISO 1183, or a combination of two or more ethylene homopolymers or copolymers as defined above; said layer (B) being at least partially bonded to the layer (A).

2. The membrane of claim 1, where the layer (B) is at least partially bonded to the layer (A) in the absence of a bonding agent.

3. The membrane of the preceding claims, wherein the layer (A) has a thickness of 500 µm or more.

4. The membrane of the preceding claims, wherein the layer (B) has a thickness from 10 to 200 µm.

5. The membrane of the preceding claims, wherein the ratio of the thickness of the layer (A) to the thickness of the layer (B) is from 5 to 100.

6. The membrane of the preceding claims, wherein the composition (i) has flexural modulus of 50 MPa or higher.

7. The membrane of the preceding claims, wherein the tlayer (B) comprises a low density polyethylene having a density of 0.915 to 0.935 g/cm³.

8. The membrane of the preceding claims, wherein the layer (B) comprises a high density polyethylene having a density of higher than 0.935 g/cm³.

9. The membrane of the preceding claims, for use in roofing applications.

10. The membrane of the preceding claims, for use in geomembrane applications.

## Patentansprüche

1. Membran umfassend eine Schicht (A) und eine Schicht (B), wobei die Schicht (A) eine Zusammensetzung (i) umfasst, die die folgenden Polymerkomponenten umfasst, wobei alle Prozentmengen auf das Gewicht bezogen sind:
a) 10-40 % eines oder mehrerer Propylenpolymere ausgewählt unter Propylenhomopolymeren, Copolymeren von Propylen mit Ethylen oder einem CH₂=CHR-α-Olefin, wobei R ein C₂-C₈-Alkylradikal ist, und Copolymeren von Propylen mit Ethylen und dem CH₂=CHR-α-Olefin, wobei die Copolymere mehr als 85 % Propylen enthalten und eine Fraktion aufweisen, die in Xylol bei Raumtemperatur mehr als 80 % unlöslich ist; und
b) 60-90 % eines oder mehrerer Copolymere ausgewählt unter (b1) Copolymeren von Ethylen mit Propylen oder einem CH₂=CHR-α-Olefin, wobei R ein C₂-C₈-Alkylradikal ist, und wahlweise geringen Mengen eines Diens und (b2) Copolymeren von Ethylen mit Propylen und dem α-Olefin und wahlweise geringen Mengen eines Diens, wobei die Copolymere Ethylen in einer Menge von weniger als 40 % enthalten und eine Löslichkeit in Xylol bei Raumtemperatur von mehr als 70 % aufweisen;
wobei die Mengen an (a) und (b) auf das Gesamtgewicht von (a) und (b) bezogen sind; und die Schicht (B) ein Ethylenhomopolymer oder -copolymer, das eine Dichte von 0,915 bis 0,980 g/cm³, ISO 1183 entsprechend gemessen, aufweist, oder eine Kombination von zwei oder mehreren Ethylenhomopolymeren oder -copolymeren, wie oben definiert, umfasst; wobei die Schicht (B) mindestens teilweise mit der Schicht (A) verbunden ist.

2. Membran nach Anspruch 1, wobei die Schicht (B) in Abwesenheit eines Bondiermittels mindestens teilweise mit der Schicht (A) verbunden ist.

3. Membran nach den vorhergehenden Ansprüchen, wobei die Schicht (A) eine Dicke von 500 µm oder mehr aufweist.

4. Membran nach den vorhergehenden Ansprüchen, wobei die Schicht (B) eine Dicke von 10 bis 200 µm aufweist.

5. Membran nach den vorhergehenden Ansprüchen, wobei das Verhältnis der Dicke der Schicht (A) zu der Dicke der Schicht (B) 5 bis 100 beträgt.

6. Membran nach den vorhergehenden Ansprüchen, wobei die Zusammensetzung (i) einen Biegemodul von 50 MPa oder mehr aufweist.

7. Membran nach den vorhergehenden Ansprüchen, wobei die Schicht (B) ein Polyethylen niedriger Dichte umfasst, das eine Dichte von 0,915 bis 0,935 g/cm³ aufweist.

8. Membran nach den vorhergehenden Ansprüchen, wobei die Schicht (B) ein Polyethylen hoher Dichte umfasst, das eine Dichte von mehr als 0,935 g/cm³ aufweist.

9. Membran nach den vorhergehenden Ansprüchen zur Verwendung bei Dacharbeiten.

10. Membran nach den vorhergehenden Ansprüchen zur Verwendung bei Geomembrananwendungen.

## Revendications

1. Membrane comprenant une couche (A) et une couche (B), où la couche (A) comprend une composition (i) comprenant les constituants polymères suivants, toutes les quantités de pourcentage étant en poids :
a) 10-40% d'un ou de plusieurs polymères de propylène choisis parmi les homopolymères de propylène, les copolymères de propylène avec de l'éthylène ou une CH₂=CHR-α-oléfine, R représentant un radical C₂-C₈-alkyle, et les copolymères de propylène avec de l'éthylène et ladite CH₂=CHR-α-oléfine, lesdits copolymères contenant plus de 85% de propylène et présentant une fraction insoluble dans le xylène à température ambiante supérieure à 80% ; et
b) 60-90% d'un ou de plusieurs copolymères choisis parmi (b1) les copolymères d'éthylène avec du propylène ou une CH₂=CHR-α-oléfine, R représentant un radical C₂-C₈-alkyle, et éventuellement des quantités mineures d'un diène et (b2) les copolymères d'éthylène avec du propylène et ladite α-oléfine, et éventuellement des quantités mineures d'un diène, lesdits copolymères contenant l'éthylène en une quantité inférieure à 40%, et présentant une solubilité dans le xylène à température ambiante supérieure à 70% ;
les quantités de (a) et (b) se référant au poids total de (a) et (b) ; et la couche (B) comprend un homopolymère ou un copolymère d'éthylène présentant une densité de 0,915 à 0,980 g/cm³, mesurée selon la norme ISO 1183, ou une combinaison de deux, ou plus, homopolymères ou copolymères d'éthylène tels que définis ci-dessus ; ladite couche (B) étant au moins partiellement liée à la couche (A).

2. Membrane selon la revendication 1, où la couche (B) est au moins partiellement liée à la couche (A) en l'absence d'un agent de liaison.

3. Membrane selon les revendications précédentes, dans laquelle la couche (A) présente une épaisseur de 500 µm ou plus.

4. Membrane selon les revendications précédentes, dans laquelle la couche (B) présente une épaisseur de 10 à 200 µm.

5. Membrane selon les revendications précédentes, dans laquelle le rapport de l'épaisseur de la couche (A) à l'épaisseur de la couche (B) vaut de 5 à 100.

6. Membrane selon les revendications précédentes, dans laquelle la composition (i) présente un module de flexion de 50 MPa ou supérieur.

7. Membrane selon les revendications précédentes, dans laquelle la couche (B) comprend un polyéthylène basse densité présentant une densité de 0,915 à 0,935 g/cm³.

8. Membrane selon les revendications précédentes, dans laquelle la couche (B) comprend un polyéthylène haute densité présentant une densité supérieure à 0,935 g/cm³.

9. Membrane selon les revendications précédentes pour une utilisation dans des applications de couverture.

10. Membrane selon les revendications précédentes pour une utilisation dans des applications de géomembrane.
